# EUROPÄISCHE PATENTSCHRIFT

(11) **EP 1 339 577 B1**
(45) Veröffentlichungstag und Bekanntmachung des Hinweises auf die Patenterteilung: **07.07.2004**
(21) Anmeldenummer: 01997424.5
(22) Anmeldetag: 20.11.2001
(51) Int. Cl.: B60T 7/10, B60T 7/04

(54) **FESTSTELLBREMSE**
PARKING BRAKE
FREIN DE STATIONNEMENT

(30) Priorität: 21.11.2000 DE 10057909; 15.05.2001 DE 10123525
(43) Veröffentlichungstag der Anmeldung: 03.09.2003
(73) Patentinhaber: Edscha Betätigungssysteme GmbH, 94491 Hengersberg (DE)
(72) Erfinder: BÖHM, Markus, 94557 Niederalteich (DE); BRAKER, Ulf, 94491 Hengersberg (DE); LORENZ, Michael, A-4780 Schärding (AT)
(74) Vertreter: Sparing, Rolf Klaus
(86) Internationale Anmeldenummer: PCT/DE2001/004326
(87) Internationale Veröffentlichungsnummer: WO 2002/042130

(56) Entgegenhaltungen:
- EP-A- 0 432 954
- DE-A- 3 529 696
- FR-A- 2 748 438
- FR-A- 2 753 947
- GB-A- 665 797
- GB-A- 2 188 712
- US-A- 2 716 902
- US-A- 5 448 928
- US-A- 6 079 794

## Beschreibung

Die Erfindung betrifft eine Feststellbremse nach dem Oberbegriff des Anspruchs 1 bzw.2 bzw. 9.

Aus der Praxis sind Feststellbremsen, insbesondere Fußfeststellbremsen für Kraftfahrzeuge, bekannt, welche bei Betätigung eines beispielsweise mit einem Pedal ausgestalteten Bremsbetätigungshebels einen entsprechenden Zug auf ein die Bremsbacken der Feststellbremse anziehendes Bremsseil ausüben und diese auf solche Weise spannt. Nachteilig bei diesen Feststellbremsen ist die Tatsache, daß der Hebelarm des Pedals einerseits und der Abstand der Anlenkung des Bremsseils von dem karosseriefesten Anlenkpunkt des Bremsbetätigungshebels andererseits ungünstige Hebelverhältnisse (etwa 1 zu 2) definiert, so daß in der Praxis zwischen einem ersten und einem zweiten Teil des Bemsseils Spannglieder eingebaut werden müssen, die eine Übersetzung um das etwa vierfache des auf sie ausgeübten Zugs bewirken. Solche Spannglieder sind problematisch, weil in der Regel die Nachstellung des Bremsseils aufgrund des Verschleißes der Bremsbeläge nur an einem Teil des Bremsseils möglich ist und diese damit schlecht ausgleichbar ist. Zudem erschweren diese Teile den Einbau des Bremsseils, weil dieses nur im Abstand hierzu geführt sein kann und verteuern somit die Montage. Zudem bildet ein solches Spannglied stets eine Schwachstelle für Material- und Montagefehler.

US 2,716,902 zeigt eine Feststellbremse für ein Fahrzeug, die als Stockbremse ausgebildet ist, bestehend aus einem stockförmigen Bremskontrollhebel und einem Halter mit einer Öffnung, durch die der stockförmige Bremskontrollhebel hindurch geführt und verschiebbar ist. An einem Ende des Bremskontrollhebels ist ein Hebel schwenkbar gelagert, der an einer weiteren Anlenkung an dem Halter gelagert ist. Der Hebel weist ein Langloch auf, in dem ein U-förmiger Zughaken zum Anbinden des Bremsseils mittels einer Lagerbuchse gelagert ist. Die Lagerbuchse ist zusätzlich in einem gekrümmten Langloch des Halters gelagert. Beim Betätigen des Bremskontrollhebels verschwenkt der Hebel um die Anlenkung. Aufgrund des Schwenkkreises des Hebels führt der Bremsbetätigungshebel eine zusätzliche Bewegung vertikal zu seiner Betätigungsrichtung aus. An dem Bremskontrollhebel ist eine Verzahnung angeordnet, so dass mittels Klinkenelementen und einem Federelement der Bremskontrollhebel in bevorzugten, durch die Verzahnung definierte, Feststellpositionen gehalten wird. Eine Auslöseeinrichtung ist derart vorgesehen, dass eine Drehbewegung des Handgriffs um eine im wesentlichen axiale Achse des Zugstocks die Verzahnung aus den Klinkenelementen löst.

GB 665,797 zeigt eine Feststellbremse für ein Fahrzeug, bestehend aus einem Handgriff, an dem ein Stock festliegt, der durch ein Führungselement an der Karosserie geführt ist. An dem Stock ist eine Verzahnung vorgesehen, die zusammen mit einem Klinkenelement eine Feststelleinrichtung bildet. Am Handgriff abgewandten Ende des Stocks ist mittels einer Anlenkung ein Lenkarm angebunden, der wiederum mittels einer weiteren Anlenkung mit einem kurzen Lenker verbunden ist. Der kurze Lenker ist mit einer Ankopplung für ein Bremsseil gekoppelt.

FR 2 748 438 A1 zeigt eine Feststellbremse für ein Fahrzeug mit einem Handgriff, der an einem Stab festgelegt ist. Der Stab ist mittels eines gradlinigen an der Karosserie festgelegten Elements geführt und axial verschiebbar. Am Ende des Stabs ist ein Fortsatz angeordnet, der an einer Achse mit einem Lenker verbunden ist. Der Lenker ist um eine bezüglich der Karosserie festen Achse schwenkbar. Die Achse teilt den Lenker in einen oberen Arm und in einen kürzeren unteren Arm. Am unteren Arm ist eine Ankopplung für ein Bremsseil angeordnet. Im Bereich der Achse weist der Lenker eine runde Ausformung auf, die an einer Seite mit einer Verzahnung versehen ist. In die Verzahnung greift eine Klinke, die an einem karosseriefesten Halter angebracht ist. Mittels eines am Handgriff angeordneten Knopfes kann die Klinke aus der Verzahnung gelöst werden.

FR 2 753 947 A1 zeigt eine Feststellbremse für ein Fahrzeug mit einem krummlinigen, bezüglich eines karosseriefesten ebenfalls krummlinigen Elements, verschiebbaren Element, an dem ein Handgriff angeordnet ist. Am anderen Ende des verschiebbaren Elements ist eine Rolle festgelegt, die bezüglich ihres Mantels mit einem Lenker in Kontakt steht, und bei Betätigen der Bremse wird die Rolle bezüglich des Lenkers abgerollt. Der Lenker ist um eine bezüglich der Karosserie festen Achse schwenkbar. Die Achse teilt den Lenker in einen oberen Arm und in einen unteren Arm. Am unteren Arm ist eine Ankopplung für ein Bremsseil angeordnet. Im Bereich der Achse weist der Lenker eine halbkreisförmige Ausformung auf, die mit einer Verzahnung versehen ist. In die Verzahnung greift eine Klinke, die an einem karosseriefesten Halter angebracht ist. Mittels eines am Handgriff angeordneten Knopfes kann die Klinke aus der Verzahnung gelöst werden.

DE 35 29 696 A1 zeigt eine Feststellbremse für ein Fahrzeug, die als eine Stockbremse ausgebildet ist, bestehend aus einem Zugstock, der in axialer Richtung verschiebbar ist. An dem Zugstock ist ein Zahnstangenteil angeordnet, das mit einem Zahnradgetriebe kämmend in Eingriff steht. An dem Zahnradgetriebe ist ein Aufwickelglied angeordnet, das eine Ankopplungseinheit für ein Bremsseil aufweist. In das Zahnstangenteil greift zusätzlich eine an einem Gehäuse festgelegte Sperrklinke ein, welche mittels einer am Zugstock angeordneten Entriegeltaste gelöst werden kann.

Es ist die Aufgabe der Erfindung eine Feststellbremse zu schaffen, die in kleinbauender Weise kostengünstig ein sicheres Feststellen ermöglicht.

Diese Aufgabe wird bei der eingangs genannten Feststellbremse erfindungsgemäß mit kennzeichnenden Merkmalen des Anspruchs 1 bzw.2 bzw.9 gelöst.

Die erfindungsgemäße Feststellbremse benötigt wenig Platz im Bereich der Mittelkonsole zwischen Fahrersitz und Beifahrersitz und ermöglicht somit eine Mehrzahl von neuen Möglichkeiten zum Nutzen des Raumgewinns, z.B. für einen Cup-holder.

Die erfindungsgemäße Feststellbremse ermöglicht es, das Bremsseil mit einer Zugbewegung des Handgriffs zu koppeln, ohne daß die Last des Bremsseils von dem Fahrer unverändert überwunden werden muß. Vielmehr übersetzt die erfindungsgemäße Feststellbremse den Weg des ausziehbaren Handgriffs zu dem weg des Bremsseils, indem der Handgriff mehrere Zentimeter aus seiner Führung herausgezogen werden kann. Es ist möglich, die Zugkraft motorisch oder durch Federn zu unterstützen.

Durch die Ausgestaltung der erfindungsgemäßen Feststellbremse kann der im Fahrgastraum zwischen den vorderen Sitzen vorzusehende Teil einer Handbremse sehr kurz ausgestaltet werden, indem z.B. nur der Handgriff sichtbar ist und der weitere Bereich durch Armlehnen oder dgl. genutzt wird.

Die erfindungsgemäße Feststellbremse schafft ein günstiges Übersetzungsverhältnis durch das Vorsehen einer Übersetzungseinheit, die die axiale Bewegung des Handgriffs in eine andere axiale Zuspannung des Bremsseils umsetzt.

Die Übersetzungseinheit ist beispielsweise durch ein Zahnrad- oder Reibradgetriebe definiert, über das ein Hebel betätigt wird, an dem die Ankoppelungseinheit angeordnet ist. Alternativ kann auch eine Mehrgelenkkinematik für denselben Zweck vorgesehen werden, die einen Hebel, an dem die Ankoppelungseinheit angelenkt ist und der um ein Schwenkgelenk relativ zum Halter verschwenkbar ist, wobei über einen Steuerlenker eine Kraft auf den der Ankoppelungseinheit abgewandten Schenkel des Hebels aufgebracht wird. Vorzugsweise sind vier Gelenke auf diese Weise hintereinandergeschaltet.

Eine Feststellklinke ist zweckmäßigerweise mit einer Klinkenfeder in Richtung auf ein Zahnsegment vorgespannt, wobei die Vorspannung der Klinkenfeder durch Betätigung eines Druckknopfes oder durch Ziehen eines Zuggestänges aufgehoben werden kann, um die Feststellposition zu lösen. Die Klinkenfeder ist beispielsweise als Drehfeder ausgebildet, deren einer Schenkel an dem Hebelhalter und deren anderer Schenkel an dem der Verzahnung zugekehrten Hebelarm der Feststellklinke, die eine Eingriffsnase aufweist, angeordnet ist.

Die erfindungsgemäße Feststellbremse erlaubt es, in kleinbauender Weise eine Übersetzung des Bremsbetätigungshebels gegenüber dem Bremsseil auf einen Faktor zwischen zwei und elf zu erreichen, vorzugsweise zwischen vier und zehn. Es versteht sich, daß nach wie vor Bremsverstärkungsglieder im Bereich des Bremsseils vorgesehen werden können, vorteilhafterweise ist dies aber nicht mehr erforderlich. Insbesondere läßt sich eine Übersetzung einstellen, die eine bei Kraftfahrzeugfeststellbremsen geeignetes Ausmaß aufweist und ohne Bremsübersetzer auskommt. Die Höhe der Übersetzung ergibt sich aus der zweckmäßigen Auswahl des Abstandes der Gelenke der Hebel zueinander.

Vorzugsweise umfaßt die Ankoppelungseinheit eine Nachstelleinrichtung für das Bremsseil, wie sie beispielsweise aus der WO-A-98 57 832 bekannt ist, mit der bei abgelegter bzw. nicht betätigter Feststellbremse aufgrund einer Federkraft das Bremsseil nachgestellt wird, um auf große Temperaturunterschiede, insbesondere aber aufgrund des Verschleißes der Bremsbeläge jederzeit nach dem Lösen der Feststellbremse eine straffe Spannung des Bremsseils herbeizuführen.

Die erfindungsgemäße Feststellbremse kann gleichermaßen als Handfeststellbremse mit einem Handgriff ausgebildet werden, bei dem ein Druckknopf die Lösefunktion der Feststellklinke betätigt, wie auch als Fußfeststellbremse, bei der Bremsbetätigungshebel mit einem Pedal versehen ist und die Entriegelung der Feststellklinke über einen Zugmechanismus realisiert ist.

Weitere Vorteile und Merkmale der Erfindung ergeben sich aus der nachfolgenden Beschreibung sowie aus den Unteransprüchen.

Die Erfindung wird nachstehend unter Bezugnahme auf die anliegenden Zeichnungen anhand von bevorzugten Ausführungsbeispielen einer erfindungsgemäßen Feststellbremse näher erläutert.
- Fig. 1: zeigt eine schematische Seitenansicht eines bevorzugten Ausführungsbeispiels einer erfindungsgemäßen Feststellbremse in einem unbetätigten Zustand.
- Fig. 2: zeigt eine schematische Seitenansicht der Feststellbremse gemäß Fig. 1 in einem betätigten Zustand.
- Fig. 3: zeigt eine Draufsicht von oben auf die Feststellbremse gemäß Fig. 1.
- Fig. 4: zeigt eine Draufsicht von unten auf die Feststellbremse gemäß Fig. 1.
- Fig.5: zeigt eine Seitenansicht eines weiteren bevorzugten Ausführungsbeispiels einer erfindungsgemäßen Feststellbremse in einem unbetätigten Zustand.
- Fig. 6: zeigt eine schematische Seitenansicht der Feststellbremse gemäß Fig. 5 in einem betätigten Zustand.
- Fig. 7: zeigt eine Draufsicht von oben auf die Feststellbremse gemäß Fig. 5.
- Fig. 8: zeigt eine Draufsicht von unten auf die Feststellbremse gemäß Fig. 5.

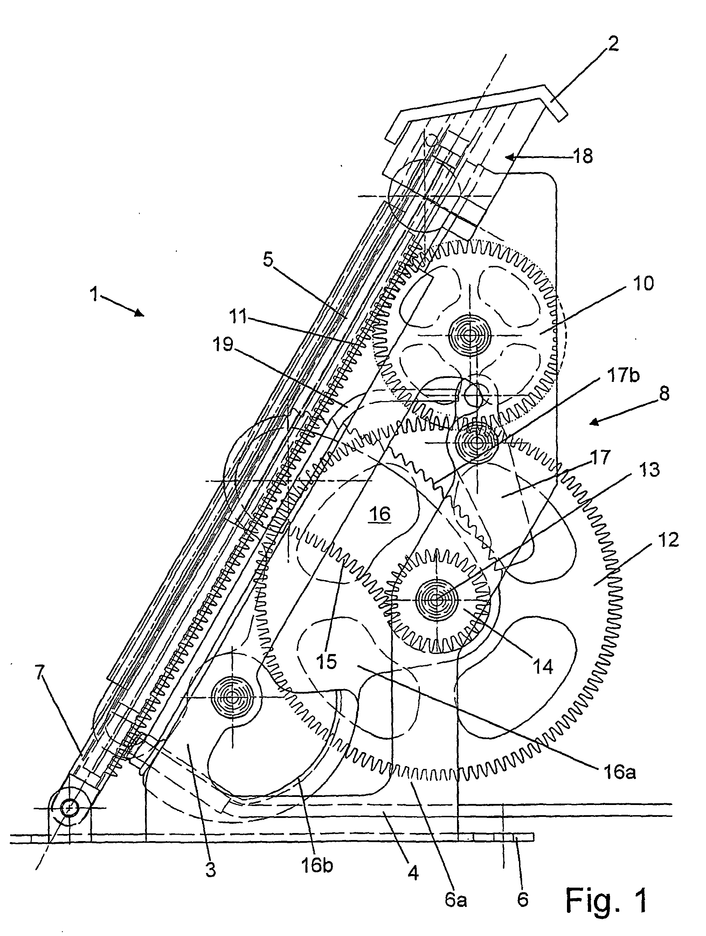

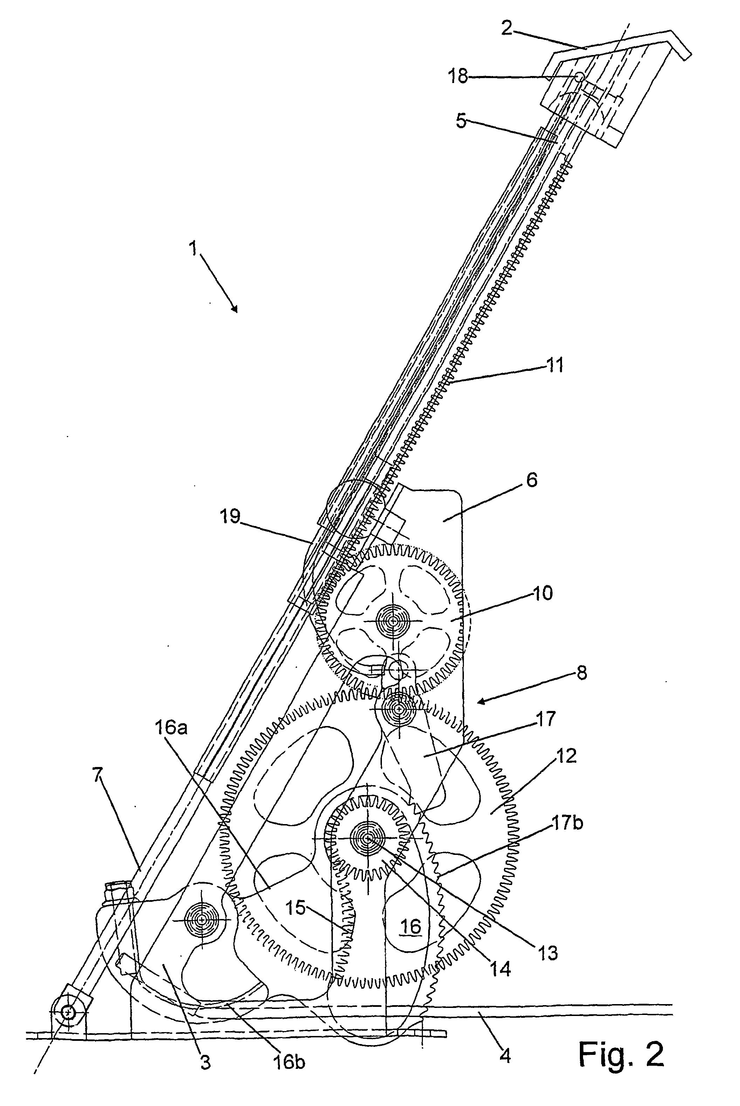

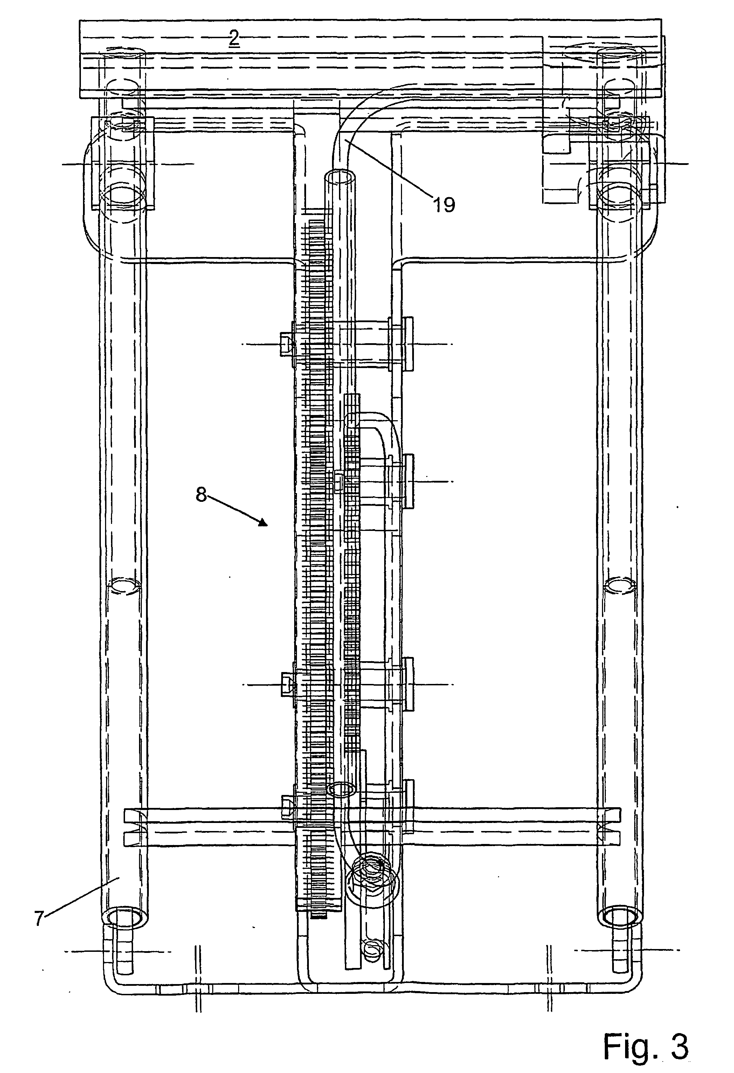

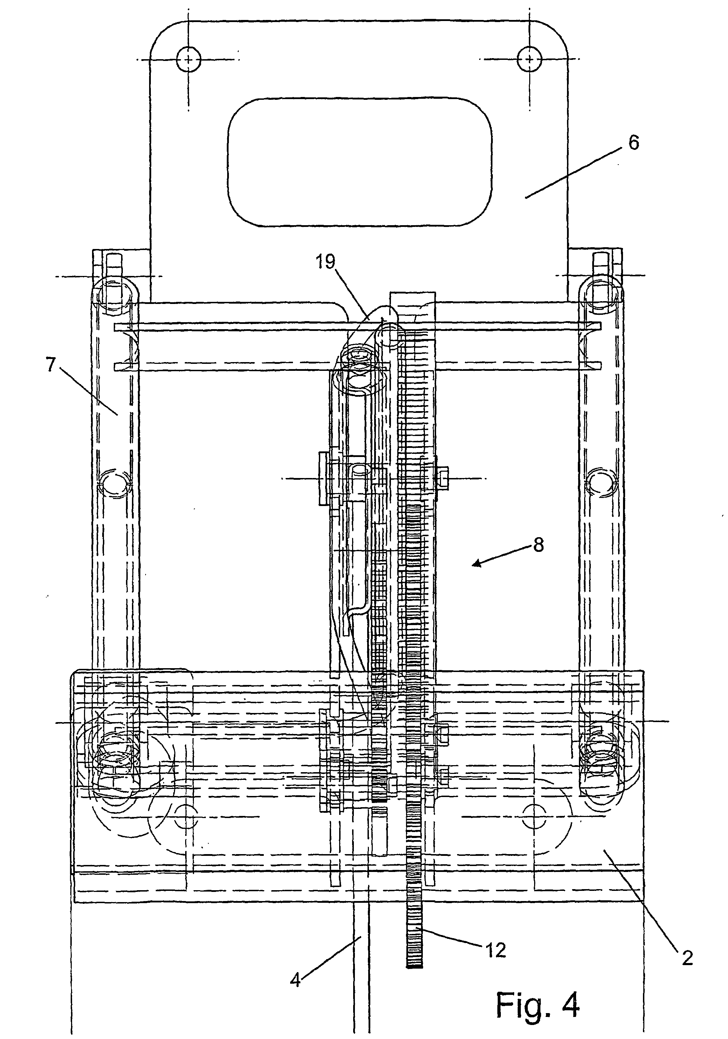

Bei der in Fig. 1 bis 4 dargestellten Feststellbremse handelt es sich um eine Handfeststellbremse 1, die durch Ziehen eines Handgriffs 2 ein an einer Ankoppelungseinheit 3 ansetzendes Bremsseil 4 spannt. Der Handgriff 2 ist auf zwei parallelen, am Handgriff 2 angeordneten Zapfen 5 befestigt, die zur axialen Verlagerung in Richtung der Zapfen 5 in zwei parallel von einem karosseriefesten Halter 6 abstehenden, eine Längsführung definierenden Rohren 7 axial geführt werden. Das obere Ende der Rohre 7 ist über einen vertikal aufragenden Träger 6a des Halters 6 abgestützt.

Die Rohre 7 stehen in einem Winkel von etwa 30° zur Vertikalen und 60° zur Horizontalen entgegen der Fahrtrichtung des Fahrzeugs ab, so daß der Handgriff 2 ergonomisch günstig mit der Hand eines Fahrers umgriffen und herangezogen werden kann. Hierfür kann eine Handballenpolsterung vorgesehen sein.

Zwischen dem Handgriff 2 und der Ankoppelungseinkeit 3 für das Bremsseil 4 ist eine insgesamt mit 8 bezeichnete Übersetzungseinheit eingeschaltet, die die lineare Betätigung des Handgriffs 2 in eine ebenfalls lineare Zugbewegung auf das Bremsseil 4 übersetzt, wobei vorliegend der längere Weg des Handgriffs 2 zur Herabsetzung der zur Betätigung erforderlichen Kraft einen linear proportional kürzen Anzugsweg des Bremsseils 4 bewirkt.

Hierzu weist die Übersetzungseinheit 8 eine Zahnradgetriebe aus einer Mehrzahl von Zahnrädern auf. Ein erstes Zahnrad 10 kämmt mit einem von dem Handgriff in Verlagerungsrichtung abstehenden, als Zahnstange ausgebildeten Fortsatz 11, wobei die Zahnstange 11 aufgrund ihrer starren Verbindung mit dem Handgriff 2 denselben Weg in Zugrichtung ausführt. Die Zugrichtung führt an dem ersten, an dem aufragenden vertikalen Holm 6a gelagerten Zahnrad 10 vorbei, wodurch das erste Zahnrad 10 bei Ziehen des Handgriffs 2 angetrieben wird. Das Zahnrad 10 ist somit ortsfest auf einem Teil des Halters 6 gelagert und dient zur Übertragung der Linearbewegung der Zahnstange 11 auf ein zweites Zahnrad 12, das etwa den doppelten Durchmesser des ersten Zahnrads 10 aufweist und auf einer ebenfalls am Holm 6a angeordneten Achse 13 gelagert ist, auf der ferner ein drittes Zahnrad 14 gelagert ist, das demnach dieselbe Winkelgeschwindigkeit und Drehrichtung wie das zweite Zahnrad 12 ausführt. Das dritte Zahnrad 14 weist etwa ein Drittel des Durchmessers des zweiten Zahnrads 12 auf.

Das dritte Zahnrad 14 ist in einem mit einem Zahnabschnitt 15 versehenen, gekrümmt verlaufenden Langloch 16 in einem Hebel 16a abgestützt, wobei durch das Anziehen des Handgriffs 2 und der über das Getriebe übertragenen Bewegung das dritte Zahnrad 14 entlang des Zahnabschnitts 15 zusammen mit der Achse 13 abgewälzt wird, und der Hebel 16a um eine Achse verschwenkt wird. Ebenfalls auf dem Hebel 16a ist schwenkbar eine als Seilscheibe 16b ausgestaltete Ankoppelungseinheit 3 für das Bremsseil 4 vorgesehen, die entgegen der Abgangsrichtung des Seils 4 bei gegenseitigem Abwälzen des dritten Zahnrads 14 und des Zahnabschnitts 15 verschwenkt wird. Die für das Ziehen des Handgriffs 2 aufzubringende Kraft hängt dann einerseits von der Getriebeübersetzung und andererseits von den durch die Achsabstände zu der Schwenkachse definierten Hebelverhältnisse des Hebels 16a ab.

Eine an dem Halter 6 schwenkbar angeordnete Klinke 17 wird durch eine Feder in Richtung auf eine Außenverzahnung 17b, die an dem Hebel 16a angeordnet ist, vorgespannt und kann auch dann noch mit dem Umfang des zweiten Zahnrads 12 ratschend zusammengreifen, wenn die Achse 13 verlagert wird. Somit definiert der Hebel 16a auch eine Feststetiverzahnung 17b, die im wesentlichen mit dem Zahnabschnitt 15 in etwa parallel verläuft. Die Klinke 17 kann durch Betätigen eines Druckknopfes 18 im Bereich des Handgriffs 2, der über eine Auslöseeinrichtung 19 mit der Klinke in Verbindung steht, entgegen der Vorspannung der Feder und ggf. einer weiteren Sicherungsfeder gelöst werden, wodurch unter der Zugspannung des Bremsseils 3 auf die Übersetzungseinheit die Zahnstange 10 und damit der Handgriff 2 zurück in eine gelöste Stellung zurückverlagert werden. Es ist möglich, eine Feder in dem Führungssystem des Handgriffs zu integrieren, wodurch eine Feder auchnoch das letzte Stück, in dem das Bremsseil 4 bereits entlastet ist, zurückgeführt wird. Vorzugsweise umfaßt das Bremsseil 4 eine selbsttätig nachstellende Seilzugnachstellung, die im unbelasteten Zustand der Feststellbremse das Bremsseil nachstellt. Die Auslöseeinrichtung 19 ist biegsam und damit ausziehbar.

Es ist vorzugsweise eine motorische Unterstützung der Feststellbremse vorgesehen, entweder hydraulisch oder pneumatisch im Bereich der Führung des Handgriffs oder über ein angetriebenes Zahnrad, z.B. mit der Zahnstange.

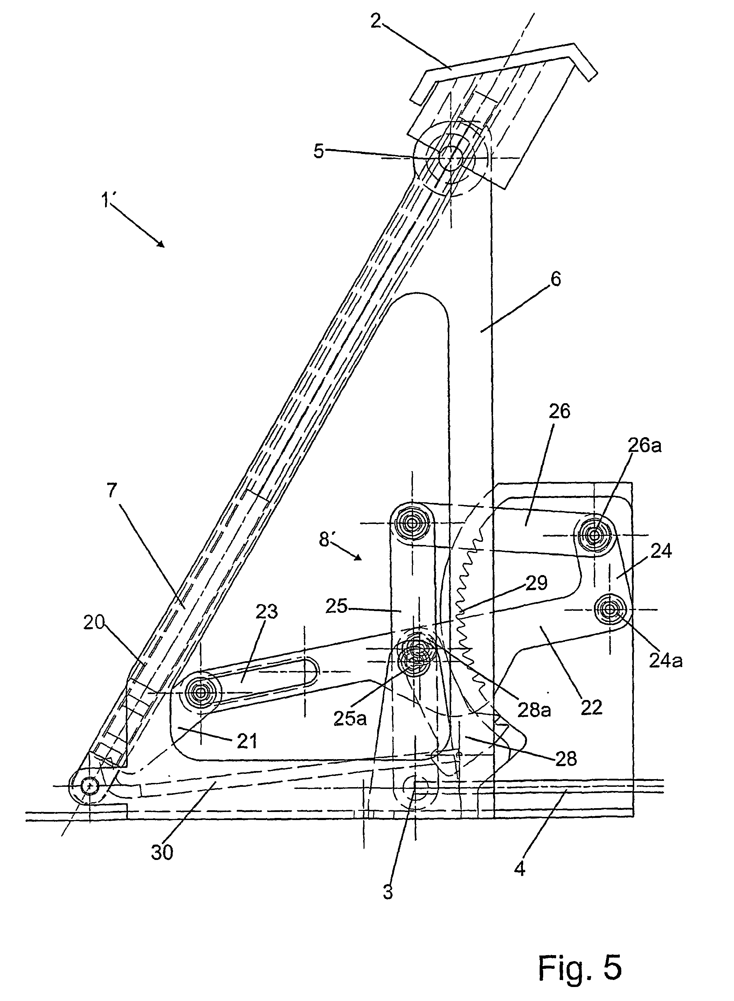

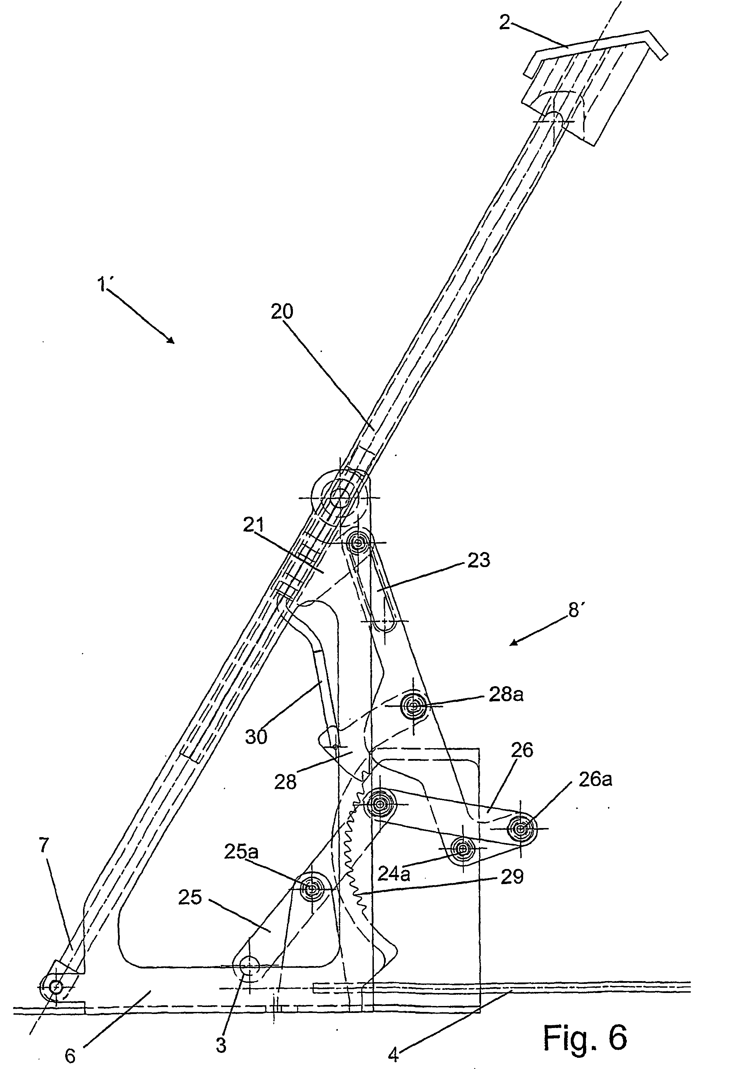

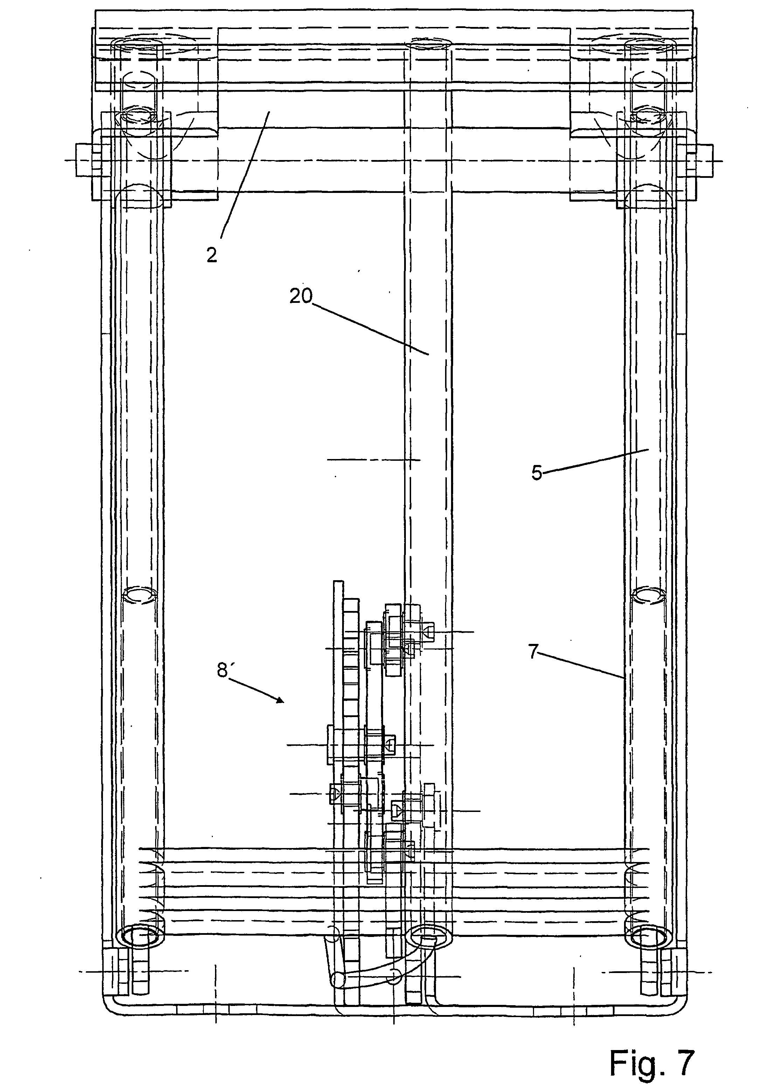

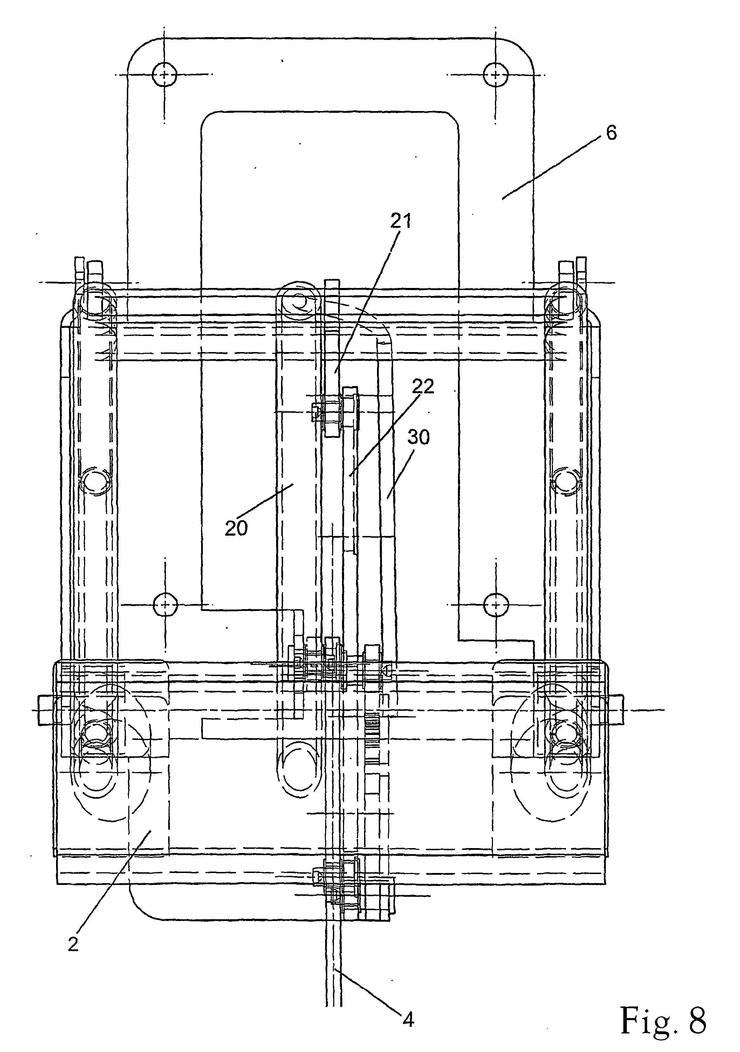

Das in Fig. 5 bis 8 dargestellte weitere Ausführungsbeispiel einer erfindungsgemäßen Feststellbremse 1' verfügt im wesentlichen über dieselben Bestandteile wie die vorstehend beschriebene Feststellbremse 1, weshalb zur Vereinfachung dieselben Bezugszeichen verwendet werden, soweit die Teile funktionell übereinstimmen und nur auf die Unterschiede nachstehend näher eingegangen wird.

Im Unterschied zu der Feststellbremse 1 weist die Feststellbremse 1' aus Fig. 5 bis 8 eine Übersetzungseinheit 8', die als Viergelenkgetriebe ausgebildet ist. Das Mehrgelenkgetriebe wird von einem als starrer oder gelenkig an dem Handgriff 2 angeordneter Fortsatz in Gestalt eines Lenkers 20 betätigt, welcher über einen Koppellenker 21 gelenkig mit einem Steuerlenker 22 schwenkbar verbunden ist, wobei der Koppeflenker 21 in ein Langloch 23 des Steuerlenkers 22 eingreift und so bei axialer Verlagerung des Lenkers 20 den sich zunächst verkürzenden und dann wieder verlängernden Abstand zwischen Lenker 20 und Steuerlenker 22 ausgleicht.

Der Steuerlenker 22 ist an einem Knie 24 im Bereich des Halters 6 schwenkbar über ein Gelenk 24a angelenkt. An einem dem Knie und dem Langloch 23 abgewandten Ende des Steuerlenkers 22 ist über ein Gelenk 26a ein Zwischenlenker 26 angeordnet. Das andere Ende des Zwischenlenkers 26 ist gelenkig mit einem Hebel 25 verbunden, der an seinem anderen Ende die Ankoppelungseinheit 3 für das Bremsseil 4 aufweist und über ein Gelenk 25a an einem emporstehenden Blechteil des Halters 6 schwenkbar angelenkt ist.

Die Ankoppelungseinrichtung 3 überträgt demnach gemäß der durch die Achsverhältnisse der Lenker und Hebel definierten, sich ändernden Übersetzung eine Zugkraft auf das Bremsseil 4.

Eine Klinke 28 ist ebenfalls schwenkbar an dem Steuerlenker 22 in etwa in dessen Mitte über ein Gelenk 28a angeordnet, und legt die jeweils durch Ziehen des Handgriffs 2 eingestellte Feststellposition durch Rasten mit einem am Rahmen 6 angeordnetes Zahnsegment 29 fest. Die Klinke 28 ist durch eine Feder in Richtung auf das Zahnsegment 29 vorgespannt und kann über eine Druckstange 30, die bei Betätigung eines im Bereich des Handgriffs 2 angeordneten Löseknopfs gespannt wird, gelöst werden.

Es ist auch hier möglich, einen motorischen Hilfsantrieb entweder im Bereich der Führung des Handriffs 2 oder im Bereich eines der Drehgelenke des Viergelenkgetriebes vorzusehen.

Beide Feststellbremsen 1 und 1' ermöglichen vorteilhaft den Einbau einer kleinbauenden Bremseinheit in dem Innenraum eines Kraftfahrzeugs, so daß wahlweise der Zwischenraum vor oder hinter dem Handgriff 2 zum Anordnen von Armlehnen, Cuphaltern oder dergl, vorgesehen werden kann.

Die Erfindung ist vorstehend anhand bestimmter Achsenabstände der Gelenke bzw. der Zahnräder erläutert worden. Es versteht sich, daß die Achsenabstände zur Einstellung eines bestimmten Übersetzugsverhältnisses erfindungsgemäß auch anders angeordnet werden können, und es versteht sich ferner, daß auch zur Erreichung einer günstigeren Übersetzung ein weiterer Zwischenhebel vorgesehen werden kann. Schließlich können die beschriebenen Elemente der beiden Ausführungsbeispiele zur Erreichung einer erfindungsgemäßen Feststellbremse auch kombiniert werden.

Die Erfindung ist vorstehend anhand einer Handfeststellbremse 1 bzw. 1' beispielhaft näher erläutert worden. Es versteht sich, daß die erfindungsgemäße Festsellbremse auch als Fußfeststellbremse mit einem Pedal ausgebildet sein kann, wobei der Handgriff 2 dann als Pedal vorgesehen ist, auf das ein Druck und nicht ein Zug ausgeübt wird. Der Löseknopf zum Lösen der Feststellklinke kann dann auch an anderer Stelle zur Handbetätigung vorgesehen sein.

## Patentansprüche

1. Feststellbremse für ein Fahrzeug, umfassend
einen relativ zu einem Halter (6) verlagerbaren Griff, wobei der Griff über eine Führung (5, 7) relativ zu dem Halter (6) axial verlagerbar ist,
eine Ankoppelungseinheit (3), die ein Bremsseil (4) bei Verlagerung des Griffs spannt, und
eine Feststelleinrichtung (17), um den Griff in einer Feststellposition zu halten, wobei mit dem Halter (6) eine Übersetzungseinheit (8; 8') gekoppelt ist, die die axiale Verlagerung eines dem Griff zugeordneten Teils in eine Betätigung des Bremsseils (4) umsetzt,
**dadurch gekennzeichnet,**
**daß** die Führung (5, 7) zwei parallele Rohre (7) umfasst, in denen jeweils ein Zapfen (5) geführt ist,
**daß** der Griff an Enden der zwei Zapfen (5) senkrecht zu deren Erstreckung angeordnet ist, und
**dass** die Feststelleinrichtung (17) außerhalb der Führung (5, 7) im Bereich der Übersetzungseinheit (8, 8') angeordnet ist.

2. Feststellbremse für ein Fahrzeug, insbesondere nach Anspruch 1, umfassend,
einen relativ zu einem Halter (6) verlagerbaren Griff, wobei der Griff über eine Führung (5, 7) relativ zu dem Halter (6) axial verlagerbar ist,
eine Ankoppelungseinheit (3), die ein Bremsseil (4) bei Verlagerung des Griffs spannt,
eine Feststelleinrichtung (17), um den Griff in einer Feststellposition zu halten, wobei mit dem Halter (6) eine Übersetzungseinheit (8') gekoppelt ist, die die axiale Verlagerung eines dem Griff zugeordneten Teils in eine Betätigung des Bremsseils (4) umsetzt, wobei eine, bzw. die mit dem Halter (6) gekoppelte Übersetzungseinheit (8') ein Mehrgelenkgetriebe mit wenigstens einem an dem Halter (6) schwenkbar gelagerten, mit dem Griff gekoppelten und mit einem Langloch (16) versehenden Steuerlenker (22) sowie einem schwenkbar mit dem Steuerlenker (22) verbundenen Koppellenker (21) umfasst,
**dadurch gekennzeichnet,**
**daß** der Koppellenker (21) in dem Langloch (16) angelenkt ist, und
**daß** der Koppellenker (21) bei Betätigung des Griffs innerhalb des Langlochs (16) verschiebbar ist.

3. Feststellbremse nach Anspruch 2, **dadurch gekennzeichnet, daß** der Koppellenker - (21) und der Steuerlenker (22) zum Ausgleich der Verlagerung des Griffs zueinander abwinkeln.

4. Feststellbremse nach Anspruch 2 oder 3, **dadurch gekennzeichnet, daß** ein an den Griff parallel zur Verlagerungsrichtung ansetzender Fortsatz (20) vorgesehen ist, der starr mit dem Griff verbunden ist und an den die Übersetzungseinheit (8') angreift.

5. Feststellbremse nach Anspruch 4, **dadurch gekennzeichnet, daß** der Fortsatz (20) in einem zu dem Griff abgewandten Ende an den Steuerlenker (22) angeschlossen ist, an den wenigstens zwei Lenker des Mehrgelenkgetriebes angeordnet sind.

6. Feststellbremse nach einem der Ansprüche 2 bis 5, **dadurch gekennzeichnet, daß** zwei Lenker des Mehrgelenkgetriebes auf einen an dem Halter (6) angelenkten Hebel (25) einwirken, dessen anderes Ende mit der Ankopplungseinheit (3) verbunden ist, die das Bremsseil (4) spannt.

7. Feststellbremse nach Anspruch 6, **dadurch gekennzeichnet, daß** der Steuerlenker (22) im Bereich eines Knies (24) an den Halter (6) angelenkt ist und an einem kurzen Schenkel einen Zwischenlenker (26) aufweist, der an dem Hebel (25) angreift.

8. Feststellbremse nach einem der Ansprüche 2 bis 7, **dadurch gekennzeichnet, daß** eine Klinke (17) an dem Steuerlenker (22) angelenkt ist.

9. Feststellbremse für ein Fahrzeug, insbesondere nach Anspruch 1, umfassend,
einen relativ zu einem Halter (6) verlagerbaren Griff, wobei der Griff über eine Führung (5, 7) relativ.zu dem Halter (6) axial verlagerbar ist,
eine Ankoppelungseinheit (3), die ein Bremsseil (4) bei Verlagerung des Griffs spannt, und
eine Feststelleinrichtung (17), um den Griff in einer Feststellposition zu halten, wobei mit dem Halter (6) eine bzw. die Übersetzungseinheit (8) gekoppelt ist, die die axiale Verlagerung eines dem Griff zugeordneten Teils in eine Betätigung des Bremsseils (4) umsetzt, wobei die Übersetzungseinheit (8) ein Zahnradgetriebe (10, 12, 14') mit einem ersten Zahnrad (10), das mit einem als Zahnstange ausgebildeten Fortsatz (11) des Griffs kämmend in Eingriff steht, umfasst, wobei das erste Zahnrad (10) wenigstens ein weiteres Zahnrad (12, 14) antreibt, und wobei ein die Ankoppelungseinheit (3) tragender Hebel (16a) mit dem Zahnradgetriebe (10, 12, 14) gekoppelt ist,
**dadurch gekennzeichnet,**
**dass** der Hebel (16a) einen in einem Langloch (16) angeordneten Zahnabschnitt (15) aufweist, und
**daß** das angetriebene Zahnrad (14) in dem Langloch (16) angeordnet ist und den Hebel (16a) durch Kämmen mit dem Zahnabschnitt (15) verschwenkt.

10. Feststellbremse nach Anspruch 9, **dadurch gekennzeichnet, daß** die Übersetzungseinheit (8) ein zweites Zahnrad (12) und ein drittes Zahnrad (14) aufweist, daß das zweite Zahnrad (12) mit dem ersten Zahnrad (10) kämmt, und daß das zweite Zahnrad (12) über eine gemeinsame Achse (13) mit dem dritten Zahnrad (14) gekoppelt ist.

11. Feststellbremse nach Anspruch 12 **dadurch gekennzeichnet, daß** das zweite Zahnrad (12) einen größeren Durchmesser als das erste Zahnrad (10) aufweist.

12. Feststellbremse nach einem der Ansprüche 9 bis 11, **dadurch gekennzeichnet, daß** der Zahnabschnitt (15) einen gekrümmten Verlauf aufweist.

13. Feststellbremse nach einem der Ansprüche 9 bis 12, **dadurch gekennzeichnet, daß** der Hebel (16a) um eine Achse drehbar ist, um die auch eine Seilscheibe (16b) angeordnet ist.

14. Feststellbremse nach einem der Ansprüche 9 bis 13, **dadurch gekennzeichnet, daß** die Feststelleinrichtung eine Klinke (17) umfaßt, die in einer Außenverzahnung (17b) der Übersetzungseinheit (8) eingreift.

15. Feststellbremse nach einem der Ansprüche 1 bis 14, **dadurch gekennzeichnet, daß** wenigstens ein Rohr (7) wenigstens abschnittsweise einen Schlitz aufweist, und daß an dem entsprechenden Zapfen (5) ein durch den Schlitz hinausragender Gelenkabschnitt vorgesehen ist, wobei an dem Gelenkabschnitt die Übersetzungseinheit (8, 8') angreift.

16. Feststellbremse nach einem der Ansprüche 1 bis 15, **dadurch gekennzeichnet, daß** eine Klinkenfeder zur Vorspannung einer als Feststellklinke (17) ausgebildeten Feststelleinrichtung in Richtung auf ein Zahnsegment (29) vorgesehen ist.

17. Feststellbremse nach einem der Ansprüche 1 bis 16, **dadurch gekennzeichnet, daß** eine Auslöseeinrichtung (18, 19) vorgesehen ist, um die Feststelleinrichtung (17) zu lösen.

18. Feststellbremse nach einem der Ansprüche 1 bis 17, **gekennzeichnet durch** eine Übersetzung des Griffs gegenüber dem Bremsseil (4) um einen Faktor zwischen drei und fünfzehn.

19. Feststellbremse nach einem der Ansprüche 1 bis 18, **dadurch gekennzeichnet, daß** die Ankoppelungseinheit (3) eine Nachstelleinrichtung für das Bremsseil (4) umfaßt.

20. Feststellbremse nach einem der Ansprüche 1 bis 19, **gekennzeichnet durch** eine Ausgestaltung des Griffs als Handgriff (2) für eine Handfeststellbremse.

21. Feststellbremse nach einem der Ansprüche 1 bis 19, **gekennzeichnet durch** eine Ausgestaltung des Griffs als Pedal für eine Fußfeststellbremse.

22. Feststellbremse nach einem der Ansprüche 1 bis 21, **dadurch gekennzeichnet, dass** die Zapfen (5) unverdrehbar in den Rohren (7) geführt sind.

## Claims

1. A parking brake for a vehicle, comprising
a grip (2) which can be displaced relative to a holder (6) and which can be pulled away axially from the holder (6) via a guide (5, 7),
a coupling unit (3) which tensions a brake cable (4) during displacement of the grip (2), and
a locking device (17) in order to hold the grip (2) in a locking position, wherein a conversion unit (8; 8') is coupled to the holder (2) and converts the axial displacement of a part assigned to the grip (2) into tensioning of the brake cable (4),
**characterized in**
**that** the guide (5, 7) comprises two tubes (7) each guiding a pin (5),
**that** the grip (2) is arranged at two ends of the pins (5), being oriented vertically to the extension of the pins (5), and
**that** the locking device (17) is arranged in a region of the conversion unit (8, 8') being arranged outside the guide (5, 7).

2. A parking brake for a vehicle, in particular as claimed in claim 1, comprising
a grip (2) which can be displaced relative to a holder (6) and which can be pulled away axially from the holder (6) via a guide (5, 7),
a coupling unit (3) which tensions a brake cable (4) during displacement of the grip (2), and
a locking device (17) in order to hold the grip (2) in a tocking position, wherein a conversion unit (8') is coupled to the holder (2) and converts the axial displacement of a part assigned to the grip (2) into tensioning of the brake cable (4), the conversion unit (8') comprising a multi-joint transmission comprising a coupling link (21) and a control link (22) mounted pivotably at the holder (6), coupled to the grip (2) and provided an elongated slot (6), the coupling link (21) being connected to the control link (8) in an articulated manner,
**characterized in**
**that** the coupling link (21) is arranged in the elongated slot (6), and
**that** during actuation of the grip (2) the coupling link (21) is movable in the elongated slot (16).

3. The parking brake as claimed in claim 2, **characterized in that** the coupling link (21) and the control link (22) bend with respect to each other in order to compensate for the displacement of the grip (2).

4. The parking brake as claimed in claim 2 or 3, **characterized in that** an extension (20) fitted on the grip (2) parallel to the displacement direction is provided, said extension being connected rigidly to the grip (2) and on which the conversion unit (8') engages.

5. The parking brake as claimed in claim 4, **characterized in that** the extension (20) is connected in the end facing away from the grip (2) to the coupling link (21) and on which at least two links of the multi-joint transmission are arranged.

6. The parking brake as claimed in one of claims 2 to 5, **characterized in that** two links of the multi-joint transmission act on a lever (25) which is articulated on the holder (6) and the other end of which are connected to the coupling unit (3) which tensions the brake cable (4).

7. The parking brake as claimed in one of claims 2 to 6, **characterized in that** the control link (22) is articulated on the holder (6) in the region of a knee and has, on a short limb, an intermediate link (26) which engages on the lever (25).

8. The parking brake as claimed in one of claims 2 to 7, **characterized in that** a catch (17) is arranged at the control link (22).

9. A parking brake for a vehicle, comprising
a grip (2) which can be displaced relative to a holder (6) and which can be pulled away axially from the holder (6) via a guide (5, 7),
a coupling unit (3) which tensions a brake cable (4) during displacement of the grip (2), and
a locking device (17) in order to hold the grip (2) in a locking position, wherein a conversion unit (8) is coupled to the holder (2) and converts the axial displacement of a part assigned to the grip (2) into tensioning of the brake cable (4), the conversion unit (8) comprising a gearwheel transmission (10, 12, 14) with a first gearwheel (10) meshing with an extension (11), designed as rack, of the grip (2) and activating a further gearwheel (12, 14), and wherein a lever (16a) supporting the coupling unit (3) is coupled to the gearwheel transmission (10, 12, 14),
**characterized in**
**that** the lever (16a) provides a toothed section (15) being arranged in an elongated slot (16), and
**that** the activated gearwheel (14) being arranged in the elongated slot (16) pivots the lever (16a) by meshing the toothed section (15).

10. The parking brake as claimed in claim 9, **characterized in that** the conversion unit (8) provides a second gearwheel (12) and a third gearwheel (14), that the second gearwheel (12) meshes with the first gearwheel (10),and that the second gearwheel (12) is coupled to the third gearwheel (14) via a mutual axis.

11. The parking brake as claimed in claim 10, **characterized in that** the second gearwheel (12) provides a larger diameter than the first gearwheel (10).

12. The parking brake as claimed in one of claims 9 to 11, **characterized in that** the toothed section (15) has a curved profile.

13. The parking brake as claimed in one of claims 9 to 12, **characterized in that** the lever (16a) can be rotated about an axis about which a cable pulley (16b) is also arranged.

14. The parking brake as claimed in one of claims 9 to 13, **characterized in that** the locking device comprises a catch (17) which engages in an outer toothing (17b) of the conversion unit (8).

15. The parking brake as claimed in one of claims 1 to 14, **characterized in that** at least one tube (7) has a slot in at least some sections, and that an articulated section protruding through the slot is provided on the corresponding pin (5), the conversion unit (8; 8') engaging on the articulated section.

16. The parking brake as claimed in one of claims 1 to 15, **characterized in that** a catch spring for pretensioning a locking device, which is designed as a locking catch (17) in the direction of a tooth segment (15; 29) is provided.

17. The parking brake as claimed in one of claims 1 to 16, **characterized in that** a release device (18, 19) is provided in order to release the locking device (17).

18. The parking brake as claimed in one of claims 1 to 17, comprising a step-up of the grip (2) relative to the brake cable (4) by a factor of to three to fifteen.

19. The parking brake as claimed in one of claims 1 to 18, **characterized in that** the coupling unit (3) comprises an adjusting device for the brake cable (4).

20. The parking brake as claimed in one of claims 1 to 19, which comprises a design of the grip (2) as a hand-grip for a hand-operated parking brake.

21. The parking brake as claimed in one of claims 1 to 19, which comprises a design of the grip (2) as a pedal for a foot-operated parking brake.

22. The parking brake as claimed in one of claims 1 to 21, **characterized in that** the pins (5) are guided in the tubes (7) in an untwistable manner.

## Revendications

1. Frein de stationnement pour un véhicule, comprenant
une poignée déplaçable par rapport à un support (6), la poignée pouvant être déplacée axialement par le biais d'un dispositif de guidage (5, 7) par rapport au support (6),
une unité d'accouplement (3) qui tend un câble de frein (4) lors du déplacement de la poignée, et
un dispositif de stationnement (17) destiné à maintenir la poignée dans une position de stationnement, une unité de transmission (8 ; 8') étant accouplée au support (6), laquelle convertit le déplacement axial d'une pièce associée à la poignée en un actionnement du câble de frein (4),
**caractérisé en ce que**
le dispositif de guidage (5, 7) comprend deux tubes parallèles (7) dans lesquels est guidé à chaque fois un tourillon (5),
**en ce que** la poignée est disposée aux extrémités des deux tourillons (5) perpendiculairement à leur étendue, et
**en ce que** le dispositif de stationnement (17) est disposé en dehors du dispositif de guidage (5, 7) dans la région de l'unité de transmission (8, 8').

2. Frein de stationnement pour un véhicule, notamment selon la revendication 1, comprenant
une poignée déplaçable par rapport à un support (6), la poignée pouvant être déplacée axialement par le biais d'un dispositif de guidage (5, 7) par rapport au support (6),
une unité d'accouplement (3) qui tend un câble de frein (4) lors du déplacement de la poignée, et
un dispositif de stationnement (17) destiné à maintenir la poignée dans une position de stationnement, une unité de transmission (8') étant accouplée au support (6), laquelle convertit le déplacement axial d'une pièce associée à la poignée en un actionnement du câble de frein (4), une unité de transmission ou l'unité de transmission (8') accouplée au support (6), comprenant une transmission à articulations multiples avec au moins un bras oscillant de commande (22) monté à pivotement sur le support (6), accouplé à la poignée et pourvu d'un trou oblong (16), ainsi qu'avec un bras oscillant d'accouplement (21) connecté à pivotement au bras oscillant de commande (22),
**caractérisé en ce que**
le bras oscillant d'accouplement (21) est articulé dans le trou oblong (16) et **en ce que** le bras oscillant d'accouplement (21) peut être déplacé à l'intérieur du trou oblong (16) lors de l'actionnement de la poignée.

3. Frein de stationnement selon la revendication 2, **caractérisé en ce que** le bras oscillant d'accouplement (21) et le bras oscillant de commande (22) sont coudés l'un par rapport à l'autre pour compenser le déplacement de la poignée.

4. Frein de stationnement selon la revendication 2 ou 3, **caractérisé en ce que** l'on prévoit une saillie (20) ajoutée sur la poignée parallèlement à la direction de déplacement, laquelle est connectée rigidement à la poignée et vient en prise avec l'unité de transmission (8').

5. Frein de stationnement selon la revendication 4, **caractérisé en ce que** la saillie (20) est raccordée dans une extrémité opposée à la poignée au bras oscillant de commande (22), sur lequel sont disposés au moins deux bras oscillants de la transmission à articulations multiples.

6. Frein de stationnement selon l'une quelconque des revendications 2 à 5, **caractérisé en ce que** deux bras oscillants de la transmission à articulations multiples agissent sur un levier (25) articulé sur le support (6), dont l'autre extrémité est connectée à l'unité de d'accouplement (3) qui tend le câble de frein (4).

7. Frein de stationnement selon la revendication 6, **caractérisé en ce que** le bras oscillant de commande (22) est articulé dans la région d'un coude (24) au support (6), et présente un bras oscillant intermédiaire (26) sur une branche courte, lequel vient en prise sur le levier (25).

8. Frein de stationnement selon l'une quelconque des revendications 2 à 7, **caractérisé en ce qu'**un cliquet (17) est articulé sur le bras oscillant de commande (22).

9. Frein de stationnement pour un véhicule, notamment selon la revendication 1, comprenant
une poignée déplaçable par rapport à un support (6), la poignée pouvant être déplacée axialement par le biais d'un dispositif de guidage (5, 7) par rapport au support (6),
une unité d'accouplement (3) qui tend un câble de frein (4) lors du déplacement de la poignée, et
un dispositif de stationnement (17) destiné à maintenir la poignée dans une position de stationnement, une unité de transmission ou l'unité de transmission (8) étant accouplée au support (6), laquelle convertit le déplacement axial d'une pièce associée à la poignée en un actionnement du câble de frein (4), l'unité de transmission (8) comprenant une transmission à roue dentée (10, 12, 14) avec une première roue dentée (10) qui vient en prise par engrènement avec une saillie (11) de la poignée réalisée sous forme de crémaillère, la première roue dentée (10) entraînant au moins une autre roue dentée (12, 14), et un levier (16a) portant l'unité d'accouplement (3) étant accouplé à la transmission à roue dentée (10, 12, 14),
**caractérisé en ce que**
le levier (16a) présente une portion dentée (15) disposée dans un trou oblong (16), et
**en ce que** la roue dentée entraînée (14) est disposée dans le trou oblong (16) et fait pivoter le levier (16a) par engrènement avec la portion dentée (15).

10. Frein de stationnement selon la revendication 9, **caractérisé en ce que** l'unité de transmission (8) présente une deuxième roue dentée (12) et une troisième roue dentée (14), **en ce que** la deuxième roue dentée (12) s'engrène avec la première roue dentée (10) et **en ce que** la deuxième roue dentée (12) est accouplée à la troisième roue dentée (14) par le biais d'un axe commun (13).

11. Frein de stationnement selon la revendication 10, **caractérisé en ce que** la deuxième roue dentée (12) présente un plus grand diamètre que la première roue dentée (10).

12. Frein de stationnement selon l'une quelconque des revendications 9 à 11, **caractérisé en ce que** la portion dentée (15) présente une allure courbée.

13. Frein de stationnement selon l'une quelconque des revendications 9 à 12, **caractérisé en ce que** le levier (16a) peut tourner autour d'un axe autour duquel est également disposée une poulie à câble (16b).

14. Frein de stationnement selon l'une quelconque des revendications 9 à 13, **caractérisé en ce que** le dispositif de stationnement comprend un cliquet (17) qui vient en prise dans une denture extérieure (17b) de l'unité de transmission (8).

15. Frein de stationnement selon l'une quelconque des revendications 1 à 14, **caractérisé en ce qu'**au moins un tube (7) présente au moins sur une portion une fente et **en ce que** sur le tourillon (5) correspondant est prévue une portion d'articulation dépassant à travers la fente, l'unité de transmission (8, 8') venant en prise sur la portion d'articulation.

16. Frein de stationnement selon l'une quelconque des revendications 1 à 15, **caractérisé en ce que** l'on prévoit un ressort à cliquet pour la précontrainte d'un dispositif de stationnement réalisé sous forme de cliquet de stationnement (17) dans la direction d'un segment denté (29).

17. Frein de stationnement selon l'une quelconque des revendications 1 à 16, **caractérisé en ce que** l'on prévoit un dispositif de déclenchement (18, 19) afin de libérer le dispositif de stationnement (17).

18. Frein de stationnement selon l'une quelconque des revendications 1 à 17, **caractérisé par** une démultiplication de la poignée par rapport au câble de frein (4) d'un facteur compris entre trois et quinze.

19. Frein de stationnement selon l'une quelconque des revendications 1 à 18, **caractérisé en ce que** l'unité d'accouplement (3) comprend un dispositif de réglage pour le câble de frein (4).

20. Frein de stationnement selon l'une quelconque des revendications 1 à 19, **caractérisé par** une configuration de la poignée sous forme de poignée à main (2) pour un frein à main.

21. Frein de stationnement selon l'une quelconque des revendications 1 à 19, **caractérisé par** une configuration de la poignée sous forme de pédale pour un frein de stationnement à pied.

22. Frein de stationnement selon l'une quelconque des revendications 1 à 21, **caractérisé en ce que** les tourillons (5) sont guidés dans les tubes (7) de manière fixe en rotation.
